# EUROPEAN PATENT SPECIFICATION

(11) **EP 3 424 740 B1**
(45) Date of publication and mention of the grant of the patent: **15.06.2022**
(21) Application number: 17179770.7
(22) Date of filing: 05.07.2017
(51) Int. Cl.: B41M 3/06, B29D 11/00, G02B 3/00, B41M 7/00

(54) **METHOD OF PRINTING 3D-MICROOPTIC IMAGES ON PACKING SYSTEMS**
VERFAHREN ZUM DRUCKEN VON MIKROOPTISCHEN 3D-BILDERN AUF VERPACKUNGSSYSTEMEN
PROCÉDÉ D'IMPRESSION D'IMAGES MICRO-OPTIQUES 3D SUR DES SYSTÈMES D'EMBALLAGE

(43) Date of publication of application: 09.01.2019
(73) Proprietor: The Procter & Gamble Company, Cincinnati, OH 45202 (US)
(72) Inventor: MEADOWS, Gant, Egham, Surrey, TW20 9NW (GB); DE BUHR, Harald, 61476 Kronberg (DE)
(74) Representative: P&G Patent Germany

(56) References cited:
- WO-A2-2004/092085
- DE-A1-102006 003 311
- US-A1- 2013 057 608

## Description

### FIELD OF THE INVENTION

The present invention relates to a method for printing 3D-microoptic images on packaging systems, and 3D-microoptic image packaging systems.

### BACKGROUND

Films used in products and packages can benefit from micro-sized patterns. Such patterns can provide various effects, such as optical effects (e.g. lensing, holographics), tactile effects (e.g. perceived softness), and/or functional effects (e.g. surface characteristics). Imparting 3D-effects can be realized by taking advantage of the moire-magnifier principle, wherein a substrate comprises images and micro-sized patterns with a specific relative arrangement. Especially, in the field of packaging systems, 3D-microoptic decoration techniques are of great interest, since they provide a high impact on the first impression of a product and serve as an eye-catcher with high holding power for consumers to stop at a product.

WO 2004/092085 A2 refers to a method of creating a selectively formed lenticular image.

DE 102006003311 A1 is about a method for producing image effect subject to viewing angle has the image printed onto a substrate and coated with lacquer and subjected to a raster type spatial pattern with forms mini lenses.

US 2013/0057608 A1 sets out a printer and printing method that forms a lenticular lens or a transparent structure based on pseudo-embossment printing or the like on paper having penetrability, and an inkjet printer performs.

3D-microoptic films are for example provided by Nanoventions, Inc., Visual Physics, /LLC, Rolling Optics, AB, and Grapac Japan Co., Inc. Commercially available films may either have images printed on one side and micro-sized lenses printed on the other side, or the images are printed on one side with continuous relief features in the shape of grooves on the same side.

However, these commercially available films have some major drawbacks: Where images and lenses are on different sides of the substrate, the substrate must be transparent so that the images are apparent from the side on which the lenses are arranged. Where the relief features are continuous, the desired moire magnifier effect is not achievable.

Lenticular designs, with lenses having an expansion of 1 mm or more and continuous relief feature designs on flexible films or labels, often provide undesired properties like decreasing their flexibility.

Further, the known lenticular designs with lenses having an expansion of 1 mm or more are often unappealing for consumers due to rough surfaces which provide an unpleasant feeling when handling a packaging system with such lenticular designs on the outer surface.

### SUMMARY

Based on the above drawbacks, there is still a need for new processes for creating 3D-microoptic effects on a variety of substrates in a fast and cost effective way.

According to the present invention, a process for making 3D-microoptic packaging systems is provided. The method comprises providing a substrate, printing a plurality of images on at least part of the first major surface of the substrate, applying a transparent varnish layer on the printed first major surface of the substrate, and forming a plurality of relief features on the outer surface of the varnish layer, wherein the relief features are micro-lenses, characterized in that the relief features on the varnish layer are formed by a filmless casting process using a flexographic casting plate.

The process allows for making a wide variety of packaging systems which are printed with 3D-microoptic images providing a moire magnifier effect on a variety of different substrates which may be transparent and non-transparent. Microlens designs can be easily incorporated into flexible films and labels of packaging systems as they are typically thin and small. Microlens designs can be incorporated into packaging systems without significantly changing their characteristics with regard to their suitability as packaging systems, e.g., their flexibility, thickness, weight, feel. Microlens designs are therefore suitable for a variety of packaging systems. They can provide a smooth surface and thereby appeal to consumers. They can be thin and lightweight and thereby retain flexibility of flexible films and labels.

### BRIEF DESCRIPTION OF THE INVENTION

The present invention relates to a method for printing 3D-microoptic images on packaging systems. The method comprises providing a substrate having a first and a second major surface; printing a plurality of images on at least part of the first major surface of the substrate to provide a substrate with a printed first major surface; applying a transparent varnish layer on the printed first major surface of the substrate, wherein the varnish layer has an inner surface being in contact with the printed first major surface of the substrate and an outer surface facing away from the substrate; and forming a plurality of relief features on the outer surface of the varnish layer, wherein the relief features are micro-lenses.

The present invention further relates to 3D-microoptic image packaging systems comprising a substrate having a first and a second major surface, a plurality of images on at least part of the first major surface, a transparent varnish layer on the first major surface of the substrate superimposing the printed images, wherein the varnish layer has an inner surface being in contact with the printed first major surface of the substrate and an outer surface facing away from the substrate, wherein the varnish layer has a plurality of relief features on the outer surface of the varnish layer, and wherein the relief features are micro-lenses.

### BRIEF DESCRIPTION OF THE DRAWINGS

While the specification concludes with claims particularly pointing out and distinctly claiming the present invention, it is believed that the same will be better understood from the following description read in conjunction with the accompanying drawings in which:
- Fig. 1: Schematic view of an inkjet printing process
- Fig. 2: Schematic view of an in-mold labeling process
- Fig. 3a-3c: Schematic view of a transfer printing process
- Fig. 4: Schematic view of a rotogravure printing process
- Fig. 5: Schematic view of a silk screen printing process
- Fig. 6: Schematic view of a letterpress printing process
- Fig. 7: Schematic view of an offset lithography process
- Fig. 8: Schematic view of a flexographic printing process
- Fig. 9a-9c: Schematic views of a printed substrate with images
- Fig. 10a-10f: Top views of varnish layers with micro-lenses
- Fig. 11a-11g: Side views of varnish layers with relief features
- Fig. 12: Schematic view of a 3D micro-optic image from a viewer's perspective
- Fig. 13: Schematic view of a method for making 3D-microoptic image packaging systems
- Fig. 14: Flowchart of making 3D-microoptic image packaging systems
- Fig. 15: Schematic view of flexographic printing press for making 3D-microoptic image packaging systems
- Fig. 16: Flowchart of making a patterned flexographic printing or casting plate
- Fig. 17a-17j: End views of the steps of making a patterned flexographic printing or casting plate
- Fig. 18: Flowchart of making a patterned flexographic printing or casting plate
- Fig. 19a-19b: End views of the steps of making a patterned flexographic printing or casting plate
- Fig. 20: Side view of a 3D-microoptic image packaging system

### DETAILED DESCRIPTION OF THE INVENTION

A "3D-microoptic image packaging system" according to the invention is a packaging system having images printed on its surface that exhibit 3D-optical effects for a viewer.

"Substrates" according to the present invention are all materials which are suitable for printing and which have a first and a second major surface. Preferably, substrates have a sheet-like shape.

"Rigid substrates" according to the invention are substrates which are resistant to deformation in response to an applied force and which are therefore not suitable for use in in-line printing processes.

A "relief feature" according to the present invention is a feature protruding from the minimum expansion of the varnish in perpendicular direction from the substrate surface.

The "image size" defines the maximum expansion of an image.

The term "micro" according to the present invention means an expansion of less than 1 mm, preferably 1 µm to less than 1 mm.

"Micro-images" according to the present invention are images with an image size of less than 1 mm.

"Micro-lenses" according to the present invention are lenses with a maximum height and width of less than 1 mm.

According to the present invention, the "distance between images" characterizes the minimum distance between images. Accordingly, the "distance between relief features" characterizes the minimum distance between relief features.

"Height" according to the present invention is defined as the expansion in perpendicular direction from a surface. For example, the height of the varnish layer is the expansion in perpendicular direction from the substrate surface. For example, the height of the relief features is the difference between the maximum expansion of the varnish in perpendicular direction from the substrate surface and the minimum expansion of the varnish in perpendicular direction from the substrate surface.

In connection with layers, the height may also be called "thickness", where the thickness of a structured layer is described as the minimum expansion of the layer in perpendicular direction from a surface.

A "plurality" according to the present invention is more than one.

According to the present invention, "transparent" means that a material has a transparency (I/I₀) of at least 0.5 in a wavelength range of from 400 to 780 nm and a material layer thickness of 10 mm.

"Porous" according to the present invention defines materials with a pore size of at least 1 nm. Materials having lower pore sizes, i.e., in the sub-nanometer range, or no pores are "non-porous" materials. The pore size can be determined by ASTM D4404.

A "photopolymer" according to the application under examination is a polymeric material that can be cured by electromagnetic irradiation, e.g., light.

The present invention relates to a method for printing 3D-microoptic images on packaging systems comprising
a. providing a substrate having a first and a second major surface;
b. printing a plurality of images on at least part of the first major surface of the substrate to provide a substrate with a printed first major surface;
c. applying a transparent varnish layer on the printed first major surface of the substrate, wherein the varnish layer has an inner surface being in contact with the printed first major surface of the substrate and an outer surface facing away from the substrate; and
d. forming a plurality of relief features on the outer surface of the varnish layer, wherein the relief features ae micro-lenses, characterized in that the relief features on the varnish layer are formed by a filmless casting process using a flexographic casting plate..

### Step a.

The method comprises the provision of a substrate having a first and a second major surface. The substrate may be flexible or rigid. Preferably, the substrate is rigid.

The substrate may be of any shape. For example, the substrate may be sheet-like, e.g., be a foil or film, have the shape of a packaging system, or have the shape of a part of a packaging system. The substrate may have any thickness. For example, the substrate has a thickness of from 1 µm to 10 cm, or from 2 µm to 5 cm, or from 5 µm to 1 cm, or from 10 µm to 5 mm, or from 20 µm to 1 mm.

The substrate may comprise polymeric materials, glass, wood, stone, ceramics, metals, woven or non-woven fabrics, paper, or combinations thereof. Preferably, the substrate comprises a polymeric material. More preferably, the polymeric material is selected from the group consisting of high density polyethylene, low density polyethylene, linear low density polyethylene, polypropylene, polyethylene terephthalate, and combinations of two or more thereof.

Rigid substrates may comprise polymeric materials, glass, wood, stone, ceramics, enamels metals, or combinations thereof. Preferably, substrates comprise a polymeric material. More preferably, the polymeric material is selected from the group consisting of high density polyethylene, low density polyethylene, linear low density polyethylene, polypropylene, polyethylene terephthalate, and combinations of two or more thereof.

The substrate may also be flexible. A flexible substrate may comprise polymeric materials, metal materials, woven or non-woven fabrics, paper, or combinations thereof, preferably a polymeric material. A flexible substrate is preferably a plastic foil or a plastic film. The polymeric material is preferably selected from the group consisting of high density polyethylene, low density polyethylene, linear low density polyethylene, polypropylene, polyethylene terephthalate, and combinations of two or more thereof.

The substrate may be porous or non-porous. Porous substrates may for example be microporous substrates with a pore size of less than 1 µm, for example of less than 500 nm or in a range of from 1 to 500 nm or from 2 to 200 nm. Preferred substrates according to the present invention are non-porous.

### Step b.

The method comprises printing a plurality of images on at least part of the first major surface of the substrate to provide a substrate with a printed first major surface.

The images may be printed by any method known in the art which is suitable for printing images on a major surface of a substrate. Preferably, the images may be printed by a process selected from inkjet printing, in-mold labeling, transfer printing, rotogravure, silk screen printing, letterpress printing, offset lithography, and flexographic printing. These printing procedures are well known in the art.

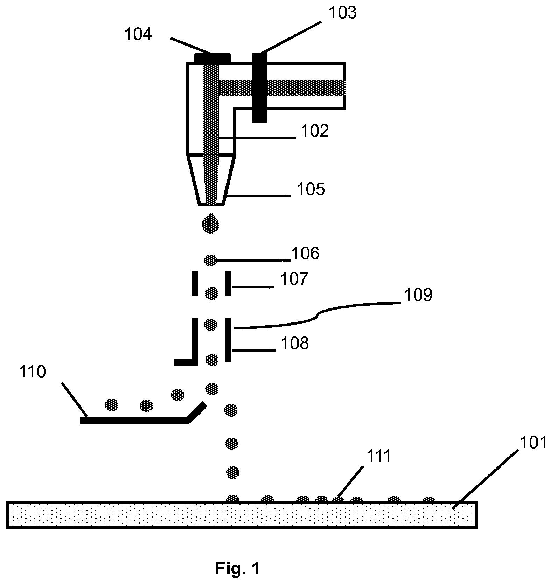

Inkjet printing generally includes a high-pressure pump directing liquid ink from a reservoir through a gun body and a microscopic nozzle creating ink droplets. The ink droplets are subjected to an electrostatic field as they form, so that each droplet can be individually charged. They are then directed by electrostatic deflection plates to print on the substrate. This process is described in further detail below with regard to Fig. 1

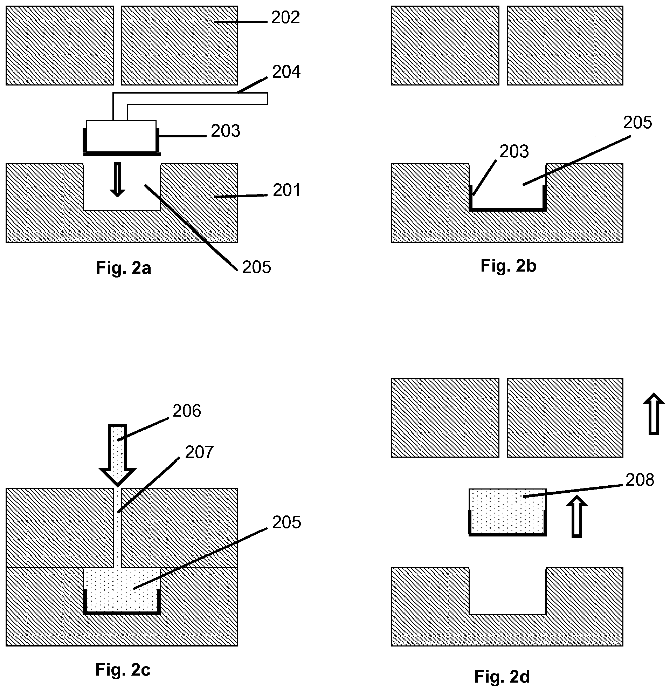

In-mold labeling is a plastic molding process which is used for shaping a plastic material while simultaneously decorating its surface. A carrier foil carrying the decoration to be transferred to the plastic part is placed inside the mold of an opened molding device. By using vacuum or static charging, the foil is fixated in the mold. The plastic material, e.g. polypropylene, is introduced into the mold in molten or softened state. The molding device is closed. By applying heat and/or pressure the plastic material is formed into the desired shape. In this step, the carrier foil and the plastic material are fused forming a printed substrate with the print being an integral part of the substrate. This process is described in further detail below with regard to Figs. 2a-2d.

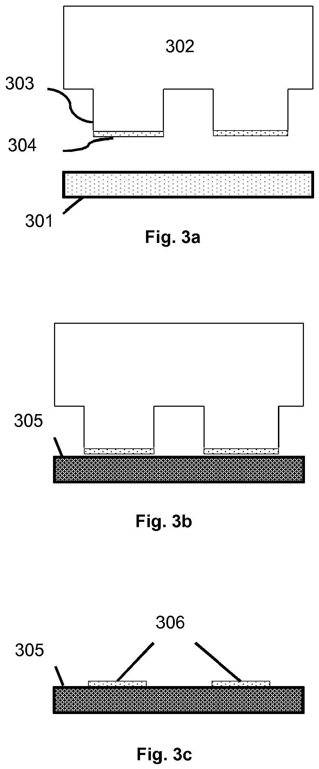

Transfer printing generally includes using a transfer device to transfer liquid-based inks from an ink pad onto a substrate. Suitable transfer devices are for example engraved metal plates like copper or steel plates, or structured polymeric stamps like rubber stamps. This process is described in further detail below with regard to Figs. 3a-3c.

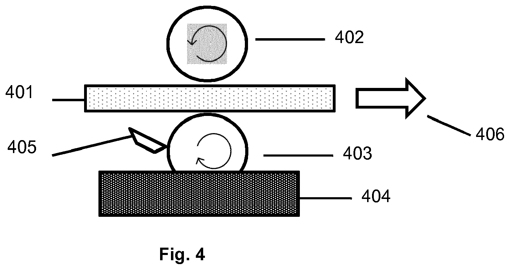

Rotogravure is a printing process using a rotary printing press that involves engraving an image onto an image carrier, namely a cylinder which is part of the rotary printing press. The ink is applied directly to the cylinder and transferred from the cylinder to the substrate. This process is described in further detail below with regard to Fig. 4.

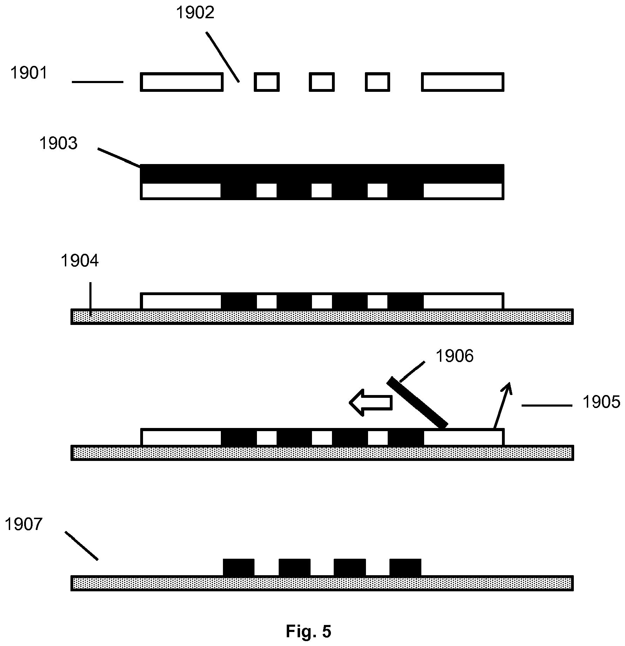

Silk screen printing is a printing technique where a design is imposed on a mesh screen which is used to transfer ink onto a substrate. The mesh screen can be made of any mesh material, preferably of polyethylene terephthalate. The open mesh apertures are filled with ink. The ink-filled mesh is contacted with the substrate which causes the ink to wet the substrate and be pulled out of the mesh apertures. This process is described in further detail below with regard to Fig. 5.

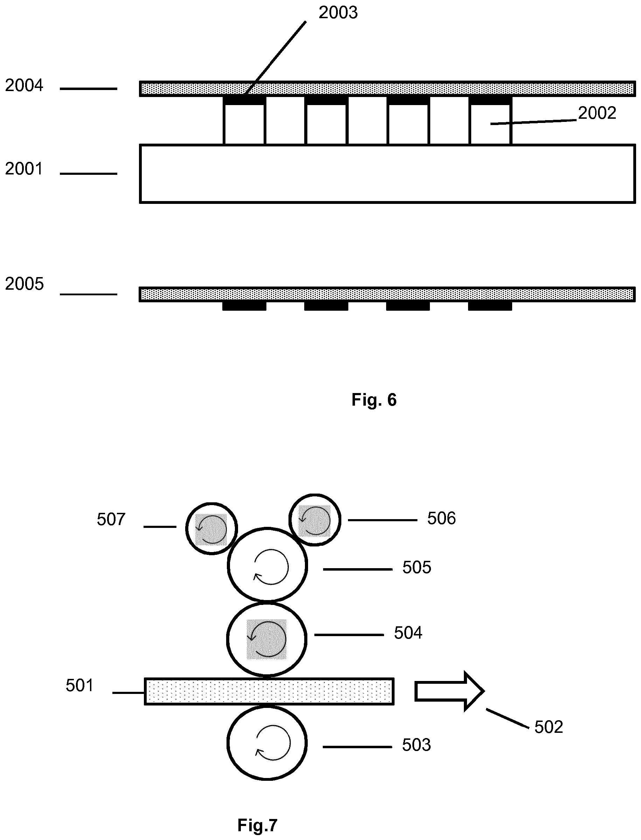

Letterpress printing is a technique of relief printing using a printing press. Thereby, many copies can be produced by repeated direct impression of an inked raised surface against sheets or rolls of a substrate. The process comprises several steps: composition, i.e., assembling movable pieces to form the desired image; imposition, i.e., arranging various assemblies from the composition step to a form ready to use on the press; lock up, i.e., fixating the assemblies to avoid printing errors; and printing by inking the reliefs of the assemblies and pressing them onto the substrate surface. This process is described in further detail below with regard to Fig. 6.

Offset lithography is a printing process where an inked image is transferred indirectly from an image carrier plate to a substrate surface. The lithographic process is based on the repulsion of oil and water. It uses a flat image carrier plate, i.e., a plate having a flat, non-engraved surface, on which the image to be printed obtains ink from ink rollers. The non-printing areas of the image carrier plate attract a water-based film, so that these areas remain ink-free. The image carrier plate transfers the image to a transfer blanket which then prints it on the substrate surface. Commonly, this process is carried out continuously using a rotary printing press, wherein the image carrier plate and the transfer blanket are rotating cylinders, i.e., the plate cylinder and the offset cylinder, and the substrate pass between the offset cylinder and an impression cylinder. This process is described in further detail below with regard to Fig. 7.

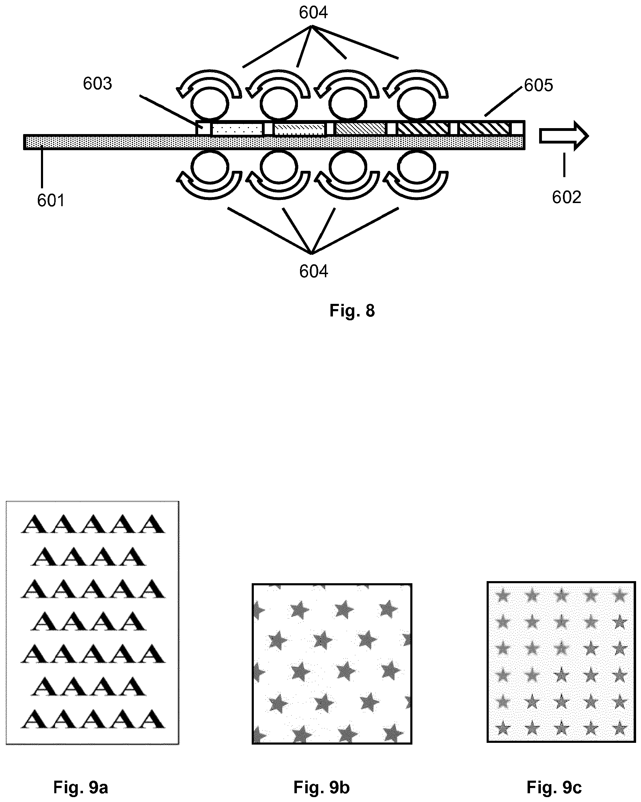

An exemplified flexographic printing procedure is described as follows: A positive mirrored master of an image is created in a flexographic printing plate. Such plates can be made by analog or digital platemaking processes which are described in further detail below. Therein, the image areas are raised above the non-image areas on the plate. Ink is transferred to the plate in a uniform thickness. The substrate is then pressed to the inked flexographic printing plate, e.g., by sandwiching it between the plate and an impression cylinder, to transfer the image. For drying the ink, different methods are available, like feeding the substrate through a dryer or curing the ink by irradiating the substrate with UV light. Where an image comprises multiple colors, preferably for each color a different flexographic printing plate is used. In this case, the plates are made, and put on a cylinder which is placed in the printing press. For the picture to be completed, the image from each flexographic printing plate is transferred to the substrate. Flexographic printing is preferred for printing flexible substrates. This process is described in further detail below with regard to Fig. 8.

The images printed on the substrate are not limited in their size, shape and color. The images may be the same or different. Preferably, at least some images are the same. For example, all images are the same. The printed surface may comprise two or more, for example two or three or four or five or more than five, arrays of images, wherein the images within an array are the same.

The images may be arranged in a regular pattern. Where the substrate comprises arrays of images, the images within an array are preferably arranged in a regular pattern. The pattern in different arrays may be the same or different.

Preferably, the images are micro-images. The image size may be at least 20 µm, preferably in the range of from 20 µm to 300 µm, for example in the range of from 50 to 100 µm. The images may have the same or different image sizes. Where the substrate comprises arrays of images, the images within an array preferably have the same image size. The image size in different arrays may be different.

The distance between the images may be in the range of from 1 µm to 1 mm, preferably in the range of from 5 µm to 100 µm, more preferably in the range of from 10 to 50 µm. It may be preferred that the distance between the images is the order of the image size, for example differing by no more than 50 % or by no more than 30 % or by no more than 10 %. The ratio of image size to image distance may be in the range of from 10:1 to 1:100, preferably in the range of from 5:1 to 1:50 or from 2:1 to 1:10. Where the substrate comprises arrays of images, the images within an array preferably have the same image distance. The image distance in different arrays may be different.

Examples of suitable arrangements of images are shown in Figs.9a-9c.

### Step c.

The method comprises applying a transparent varnish layer in the printed first major surface of the substrate. The varnish layer has an inner surface which is in contact with the printed first major surface of the substrate, and an outer surface facing away from the substrate.

According to the present invention, the varnish layer may be formed by applying a varnish composition to the printed first major surface of the printed substrate and subsequent hardening to form the varnish layer. For example, the varnish composition may be applied by spraying, dripping, rolling, flooding, spin coating or dip coating processes.

The varnish composition may be any varnish known in the art which is compatible with the respective substrate material, which is suitable for coating a flexible substrate and which is suitable for use in an in-line process. Preferably the varnish is heat curable, light curable or both, preferably UV curable.

The varnish may for example comprise polyolefins like polyethylene, preferably LLDPE, LDPE, MDPE, HDPE, or polypropylene, polyesters like polyethylene terephthalate, polyamides like nylon, halogenated vinyl resins like polyvinyl chloride, poly(meth)acrylates, biodegradable plastics, polyurethanes, alkyd resins, epoxy phenolic resins, or combinations of two or more thereof.

Biodegradable plastics are plastics that are decomposed by the action of living organisms like bacteria, in particular bioplastics. They may for example be selected from aliphatic polyesters, polyanhydrides, polyvinyl alcohol, starch derivatives, cellulose esters like cellulose acetate and nitrocellulose, and polyethylene terephthalate. Bioplastics are plastics derived from renewable biomass sources like vegetable fats and oils, corn starch or microbiota, preferably composed of starches, cellulose or biopolymers. They may for example be selected from starch-based plastics, cellulose-based plastics, protein-based plastics, polyhydroxyalkanoates like poly-3-hydroxybutyrate, polyhydroxyvalerate, polyhydroxyhexanoate, polylactic acid, and polyhydroxyurethanes.

Preferably the varnish is an acrylic varnish. An acrylic varnish according to the invention may be a varnish comprising poly(meth)acrylate, i.e., polyacrylic acid, polymethacrylic acid, polyacrylic acid derivatives like carboxylates, esters, amides or salts thereof, polymethacrylic acid derivatives like carboxylates, esters, amines or salts thereof, copolymers thereof, or combinations of two or more thereof. Preferably, the salts are alkaline metal salts, preferably sodium salts, in particular sodium polyacrylate.

Preferably the acrylic varnish comprises a structural element of formula (I) or (II) 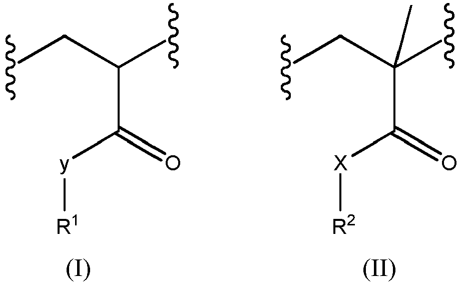 wherein X and Y may be selected from N and O, preferably O; and R¹ and R² may be selected from H, C₁-C₁₈ alkyl, C₁-C₁₈ alkenyl, C₆-C₁₄ aryl, preferably from H, methyl and ethyl.

### Step d.

The method comprises forming a plurality of relief features on the outer surface of the varnish layer.

The relief features on the varnish layer may be formed by a process similar to the above described printing processes, wherein relief features are printed instead of images. The relief features are formed by a process being flexographic casting.

The relief features are formed by a filmless casting process using a flexographic casting plate. In a filmless casting process, a mirrored master of the relief features is created in a flexographic casting plate. Methods of making such plates are described in further detail below. The relief feature areas are raised above the non-relief feature areas on the plate. Varnish is transferred to the plate. The printed substrate is then pressed to the flexographic casting plate, e.g., by sandwiching it between the plate and an impression cylinder, to transfer the varnish and thereby form the relief features.

For curing the varnish, different methods are available, like heat curing or UV curing. Preferably the varnish is cured by UV curing.

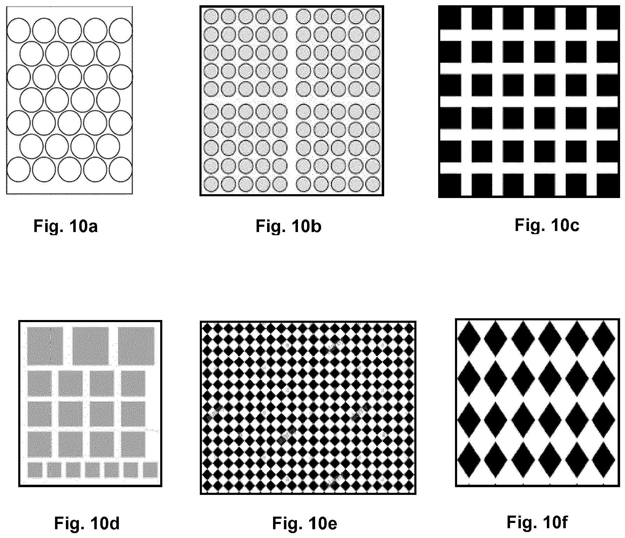

The relief features formed on the outer surface of the varnish layer are micro-lenses. According to the invention, micro-lenses are discontinuous relief features, i.e., which are not continuous in one direction of the substrate, with the ratio of the smallest expansion to the largest expansion of one relief feature being in the range of from 1:1000 to 1:1, preferably 1:100 to 1:1, more preferably 1:10 to 1:1. From a top view, micro-lenses may be round or angular, for example circular, elliptical, angular with 3 or 4 or 5 or 6 or 8 or more than 8 corners. Preferably, angular micro-lenses are selected from the group consisting of triangles, squares, rectangles, rhombi, and regular polygons like pentagons, hexagons, or octagons. Examples of shapes of discontinuous relief features are shown in Figs. 10a-10f.

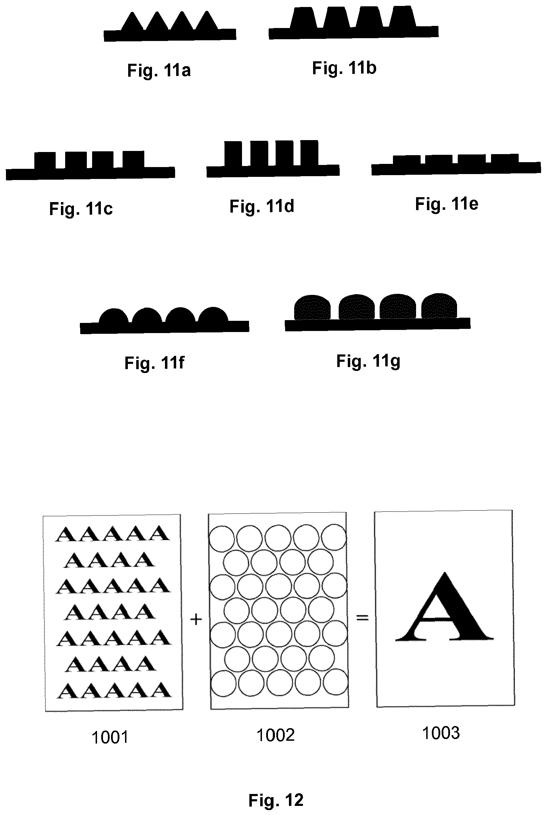

From a side view, the relief features may for example have the shape of triangles, trapezoids, squares, rectangles, or partial circles. Preferred side-view shapes of the relief features are shown in Figs. 11a-11g.

Preferably, the relief features are in the shape of partial spheres, partial ellipsoids, cylinders, cones, tetrahedrons, pyramids, hexagonal pyramids, octagonal pyramids, cubes, cuboids, pentagonal prisms, hexagonal prisms. The relief features are preferably in the shape of partial spheres.

The relief features may be arranged in a regular pattern. Where the substrate comprises arrays of relief features, the relief features within an array are preferably arranged in a regular pattern. The pattern in different arrays may be the same or different.

Preferably, the relief features have a height in the range of from 50 nm to 150 µm, preferably from 10 to 30 µm.

Preferably, the size of the relief features is at least 20 µm, preferably in the range of from 20 µm to 300 µm, for example in the range of from 50 to 100 µm. The relief features may have the same or different sizes. Where the substrate comprises arrays of relief features, the relief features within an array preferably have the same size. The size of the relief features in different arrays may be different.

Any repeat pattern of relief features and images and their arrangement relative to each other can be used as long as an interference pattern (a moire magnification effect) is created. This principle is shown in Fig. 12.

The pattern of the relief features and the images may be the same or different. It is preferred that the relief features and the images have an identical pattern. It may also be preferred that each image is superimposed with a relief feature.

The ratio of the maximum diameter of the relief features to the maximum diameter of the images may be at least 1, for example the ratio is in the range of from 50:1 to 1:10, or 10:1 to 1:2, or 5:1 to 1:1.2, or 2:1 to 1:1, more preferably from 1.3:1 to 1:1. Where different arrays of images and/or relief features are arranged on a substrate, the above diameter ratio preferably relates to at least one array, more preferably all arrays.

It may be most preferred for the invention that the relief features and the images have an identical pattern, wherein each image is superimposed with a relief feature which has at least the same maximum diameter as the image and which is centrally arranged on top of the image.

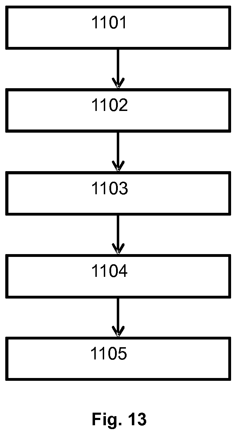

Preferred examples of the process are described in further detail with regard to Figs. 13-15.

### Flexographic printing/casting plate

Where the images are printed by flexographic printing, preferably a flexographic printing plate is used. Where the relief features are formed by a filmless casting process, preferably a flexographic casting plate is used.

The flexographic printing plate, the flexographic casting plate or both may be made of a plastic material, for example polypropylene, high density polyethylene, low density polyethylene, linear low density polyethylene, polyethylene terephthalate, and combinations of two or more thereof, preferably polypropylene.

The flexographic printing plate, the flexographic casting plate or both may be flexible or rigid, preferably flexible.

The flexographic printing plate, the flexographic casting plate or both may be made by a process comprising injection molding, blow molding, embossing, printing, engraving, or combinations thereof.

It may be preferred according to the invention that the flexographic printing plate, the flexographic casting plate or both are made by a process comprising the following steps:
i. providing a flexible patterned substrate;
ii. pressing the patterned surface of the patterned substrate onto an uncured soft photopolymer plate to provide a patterned uncured photopolymer plate; and
iii. curing the patterned uncured photopolymer plate to provide the patterned flexographic plate.

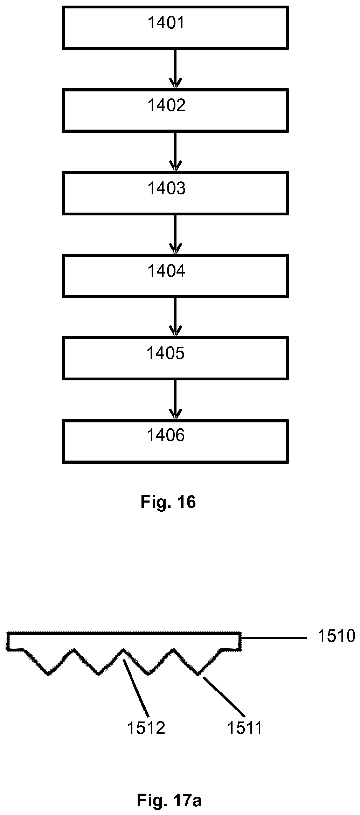

For example, a patterned substrate can be pressed into an uncured soft photopolymer plate to form a patterned flexographic printing or casting plate, which can be used to impart micro-sized patterns into curable coatings on films. This analog impression process does not require precise equipment control or the use of a wash-out step as known from prior applications. The resulting flexographic printing or casting plate can be used with commercially available coatings, on conventional flexographic equipment, and can last for many thousands of cycles, so the plate is also easy and inexpensive to use. This process is described in further detail with regard to Figs. 16 and 17a-j.

The patterned substrates may be flexible or rigid. Flexible patterned substrates suitable for the invention may be commercially purchased in the form of a flexible patterned film, such as a CAST AND CURE holographic film available from Breit Technologies of Overland Park, Kansas, United States. A flexible patterned substrate can be any suitable material that is flexible (e.g. a thin, pliable, sheet-like material), has suitable pattern of relief features, and can be processed as described with regard to Fig. 16. Examples of flexible patterned substrates include textured paper, fabric, micro-embossed film, optical lens film. Rigid patterned substrates may also be suitable for the invention, such as for example metal sheets, molded plastic sheets, or silicon wafers. Preferably, the patterned substrate is flexible.

The uncured soft photopolymer plate can have various overall thicknesses, for example of from 0.1 mm to 10.0 mm, or from 0.5 to 5 mm or from 0.8 to 3 mm, preferably from 1.0 to 2 mm. An uncured soft photopolymer plate may for example have a thickness of 1.14 mm or of 1.70 mm. The uncured soft photopolymer plate may however also be provided without a protective mask. Uncured soft photopolymers are commercially available in the form of a flexographic plate (with and without a mask layer), such as: CYREL FAST (e.g. types DFUV, DFR, DFM, and DFP) flexographic plates available from DuPont of Wilmington, Delaware, United States or flexographic plates such as types UVR, MAX, and MVP available from MacDermid, Inc. of Morristown, Tennessee, United States. Uncured soft photopolymer plates may be made from one or more suitable materials (such as mixtures of monomers, oligomers, and/or photoinitiators; common forms include acrylates and silicones) that are curable into a hardened state by exposure to visible and/or UV light, as known in the art.

It may be preferred according to the invention that the flexographic printing plate, the flexographic casting plate or both are made by a process comprising the following steps:
(i) providing a rigid patterned substrate; and
(ii) applying a polymeric material, preferably polypropylene, in an injection molding process on the rigid patterned substrate to provide the patterned flexographic plate.

The rigid patterned substrate may be made of a material selected from polymeric materials, metal materials, glass, ceramics, minerals, combinations of two or more thereof, and composite materials of one or more of the aforementioned materials. Preferably, the rigid patterned substrate is a patterned steel plate.

The pattern in the rigid substrate can be formed by any suitable method for patterning rigid substrates, for example injection molding, blow molding, embossing, printing, engraving, or combinations thereof. Preferably, the pattern of the rigid patterned substrate is made by laser pulse engraving.

The polymeric material may be a thermoplastic resin, for example selected from polypropylene, high density polyethylene, low density polyethylene, linear low density polyethylene, polyethylene terephthalate, and combinations of two or more thereof. Preferably, the polymeric material is polypropylene.

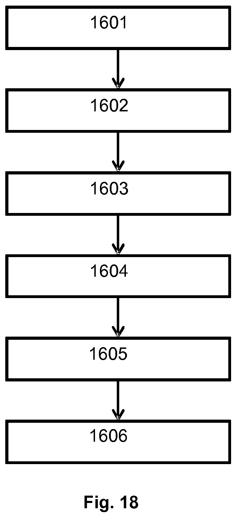

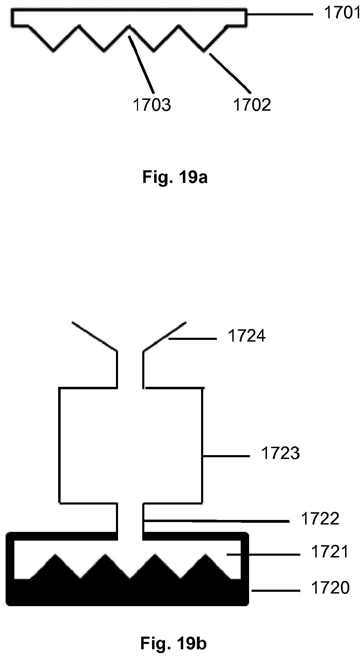

The polymeric material may be applied in an injection molding process on the rigid patterned substrate. The general operation of injection molding is commonly known in the art. For example, the following procedure may be followed:
The polymeric material is heated to a molten or malleable state. The material is then forced through a nozzle onto the rigid patterned substrate which serves as a mold cavity. The plastic material is then cooled on the mold, for example by the mold as such remaining cold, by external cooling, or both. This process is described in further detail with regard to Figs. 18 and 19a-b.

The invention further relates to 3D-microoptic image packaging systems comprising
A. a flexible substrate having a first and a second major surface;
B. a plurality of images on at least part of the first major surface;
C. a transparent varnish layer on the first major surface of the substrate superimposing the printed images.

Therein, the varnish layer has an inner surface being in contact with the printed first major surface of the substrate and an outer surface facing away from the substrate. Further, the varnish layer has a plurality of relief features on the outer surface of the varnish layer.

The relief features are micro-lenses, characterized in that the relief features on the varnish layer are formed by a filmless casting process using a flexographic casting plate.

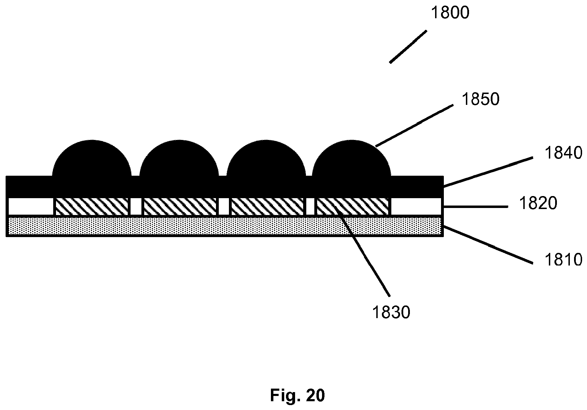

The preferred embodiments of the flexible substrate, the images, the varnish layer and the relief features described above with regard to the method according to the invention also apply to the flexible substrate, the images, the varnish layer and the relief features of the 3D-microoptic image packaging systems. One exemplary 3D-microoptic image packaging system is shown in Fig. 20.

The 3D-microoptic image packaging systems are suitable for food and non-food packaging systems, for example for packaging personal care and pharma products, household and gardening products, entertainment and media products, electronic devices, toys, sports products.

### DETAILED DESCRIPTION OF THE FIGURES

Fig. 1 shows an inkjet printing process. A high pressure pump 103 directs liquid ink 102 through a gun body and a nozzle 105. A piezoelectric crystal 104 creates an acoustic wave, thereby breaking the stream of ink 102 into droplets 106. The ink droplets are subjected to an electrostatic field by a charging electrode 107. In another electrostatic field 109 the droplets are directed by electrostatic deflection plates 108 to print on the substrate 101 or are allowed to continue undeflected to a collection gutter 110 for re-use. The result is a substrate 101 with ink droplets 111 disposed thereon forming images.

Fig. 2 shows an in-mold labeling process. The molding device used for in-mold labeling comprises two parts: a lower part 201 comprising the mold 205, and an upper part 202 for closing the mold and filling the plastic material into the mold 205. In a first step, a printed label 203 is introduced into the mold 205 using a handling device 204. The handling device 204 is removed. The printed label 203 is fixated in the mold 205 so that no air pockets or creases adversely affect the product. The molding device is closed. Through an opening 207, the plastic material 206 is introduced into the mold 205. After heat and pressure treatment and subsequent cooling, the molding device is opened and a molded plastic material with a printed surface 208 is obtained.

Fig. 3a-3c shows a transfer printing process. The transfer device 302 includes a plurality of posts 303. The posts 302 can pick up liquid-based ink 304 from an ink pad 301. The picked-up ink 304 can then be transferred from the posts 303 of the transfer device 302 onto the surface of the substrate 305. After removing the transfer device 302, printed images 306 are disposed on the surface of the substrate 305.

Fig. 4 shows a rotogravure printing process. Therein, the substrate 401 is printed continuously by passing through a rotary printing press in direction 406. The rotary printing press comprises a gravure cylinder 403 and an impression cylinder 402. An image is engraved onto the gravure cylinder 403. The gravure cylinder 403 is in contact with an ink reservoir 404. Excess ink is removed from the gravure cylinder 403 by a doctor blade 405 before coming into contact with the major surface of the substrate 401 which is to be printed. The impression cylinder 402 applies a pressure from the other side, i.e., on the second major surface of the substrate 401. A substrate with a printed surface is thereby obtained.

Fig. 5 shows a silk screen printing process. Therein, a mesh 1901, preferably made of polyethylene terephthalate, with mesh apertures 1902 is provided. The mesh 1901 is contacted with an ink 1903, so that the ink fills the mesh apertures 1902. The ink-filled mesh is then contacted with a substrate 1904. By using a squeezer 1906, the ink is squeezed out of the mesh apertures 1902 and onto the substrate 1904. The mesh 1901 is removed 1905 to provide the printed substrate 1907.

Fig. 6 shows a letterpress printing process. Therein, a bed 2001 is provided. In the bed 2001, movable pieces 2002 are assembled to form an image. The movable pieces 2002 are inked so that the top surfaces of the movable pieces 2002 are coated with the ink 2003. The substrate 2004 is then pressed onto the movable pieces 2002 so that the inked surface 2003 contacts the substrate 2004 and thereby transfers the ink to the substrate 2004 to provide the printed substrate 2005.

Fig. 7 shows an offset lithography process. Therein, a substrate 501 is printed continuously by passing through a rotary printing press in direction 502. The rotary printing press comprises an impression cylinder 503, an offset cylinder 504, and a plate cylinder 505. The plate cylinder 505 is further in contact with a dampening unit comprising a water fountain and a dampening cylinder 507, and an inking unit comprising an ink fountain and an inking cylinder 506. The inking and dampening units deliver ink and water onto the plate cylinder 505. The plate cylinder 505 transfers the ink onto the blanket covering the offset cylinder 504. The substrate 501 is pressed against the offset cylinder 504 by the impression cylinder 503, transferring the ink onto the substrate to form a printed image.

Fig. 8 is a schematic view of a flexographic printing process. The flexible substrate 601 passes through the flexographic printing press in the indicated direction 602. During passing through the flexographic printing press, an ink layer 603 comprising a plurality of images 605 is printed on the substrate 601 via ink stations 604, wherein each of the ink stations 604 contributes part of the images 605.

Figs. 9a-9c show schematic views of printed substrates with different regular patterns of different images.

In Figs. 10a-10f, top views of varnish layers with different top view shapes of micro-lenses are shown. Figs. 10a and 10b show a circular shape of the relief features. Figs. 10d-10e show a square shape of the relief features. Fig. 10f shows a rhombic shape of the relief features.

In Figs. 11a-11g, side views of varnish layers with preferred side view shapes of the relief features are shown. Fig. 11a shows a triangular shape of the relief features. Fig. 11b shows a trapezoid shape of the relief features. Fig. 11c shows a square shape of the relief features. Figs. 11d and 11e show a rectangular shape of the relief features. Fig. 11f shows relief features in the shape of partial spheres. Fig. 11g shows relief features in the shape of partial ellipsoids.

Fig. 12 shows a schematic view of the moire magnifier principle of the provision of a 3D micro-optic image from a viewer's perspective: a printed substrate with a regular pattern of micro-images 1001 is superimposed with a varnish layer with circular micro-lenses 1002. The resulting 3D micro-optic image 1003 is caused by a moire magnification effect.

Fig. 13 is a flowchart that illustrates the steps of printing 3D-microoptic images on packaging systems. Step 1101 includes providing a substrate. Step 1102 includes printing a plurality of images on the first major surface of the substrate. Step 1103 includes applying a varnish layer on the printed first major surface of the substrate. Step 1104 includes forming a plurality of relief features on the outer surface of the varnish layer. Result 1105 is a 3D-microoptic image packaging system resulting from the steps 1101-1104. The 3D-microoptic effect is caused by the overlaying of images and relief features resulting in a moire magnification effect.

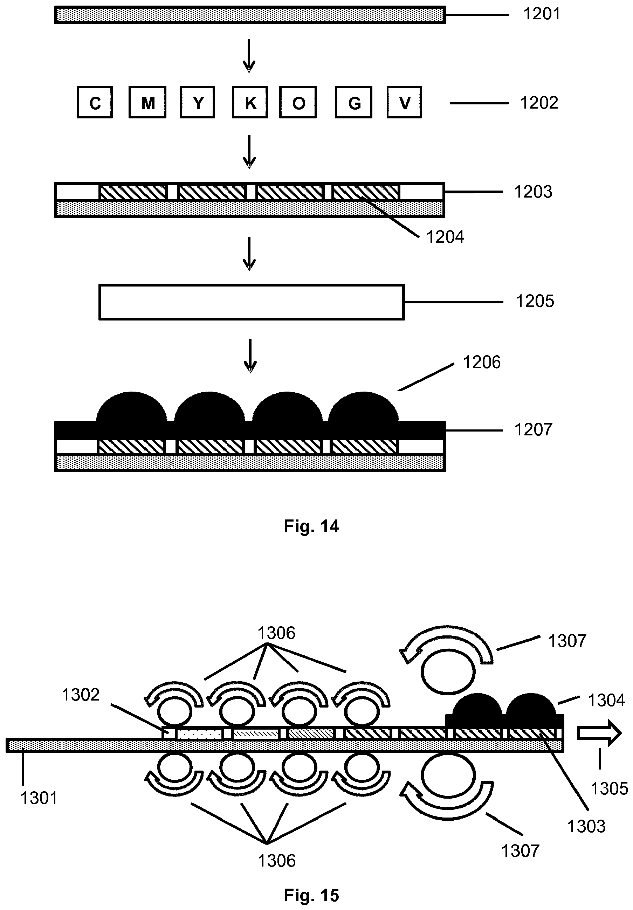

Fig. 14 shows a process according to the invention. A substrate 1201 is provided. Images are printed on the substrate 1201 via ink stations 1202 in a flexographic printing process, providing a printed substrate with an ink layer 1203 with micro-images 1204 on one surface of the substrate 1201. A flexographic casting plate 1205 is then used for applying a varnish layer 1206 and casting varnish micro-lenses 1207 which superimpose the micro-images.

Fig. 15 is a schematic view of a flexographic printing press suitable for printing 3D-microoptic images on packaging systems. The substrate 1301 passes the flexographic printing press in the indicated direction 1305. During passing through the flexographic printing press, an ink layer 1302 comprising a plurality of images 1303 is printed on the substrate 1301 via ink stations 1306, wherein each of the ink stations 1306 contributes part of the images 1303. A varnish layer comprising a plurality of relief features 1034 is casted via a varnish station 1307.

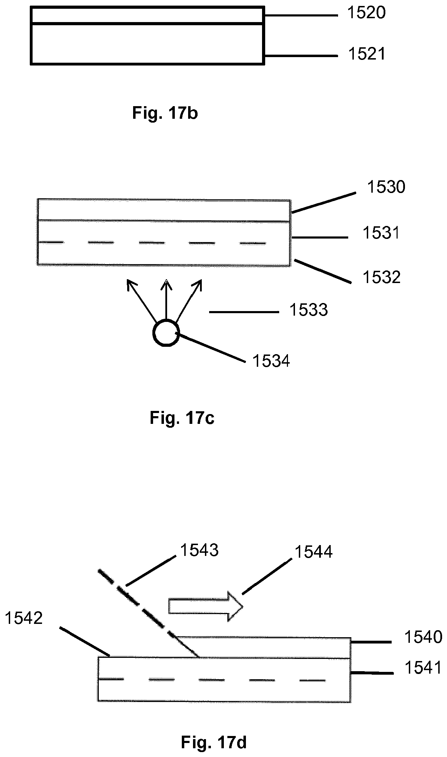

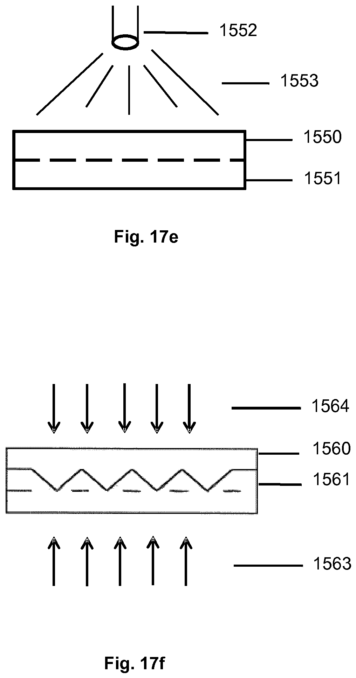

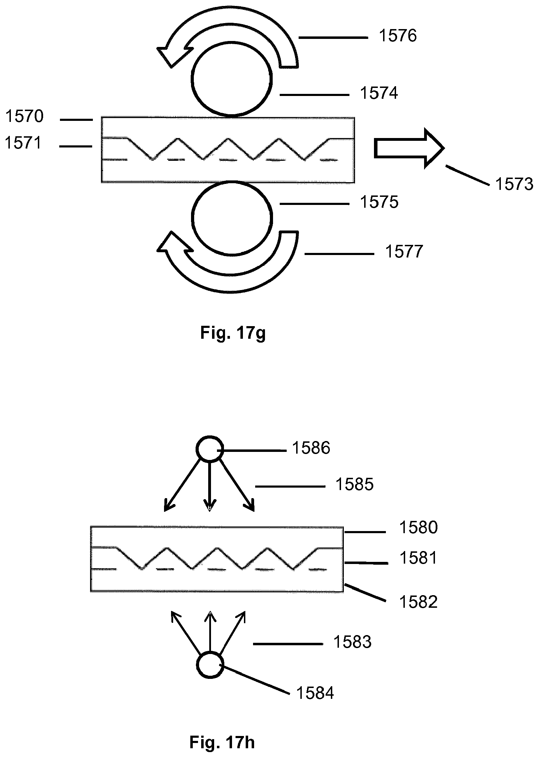

Fig. 16 is a flowchart that illustrates the steps of making a patterned flexographic printing or casting plate according to the invention. Step 1401 includes providing a patterned substrate, preferably a flexible patterned substrate, which is described in further detail in connection with Fig. 17a. Step 1402 includes providing an uncured soft photopolymer plate, as described in connection with Fig. 17b. Step 1403 includes optional pretreatment steps of the plate, as described in connection with Figs. 17c-17e. Step 1404 includes impressing the substrate into the plate, as described in connection with Figs. 17f and 17g. Step 1405 includes curing the plate, as described in connection with Figs. 17h-17j. Result 1406 is the flexographic printing or casting plate resulting from the steps 1401-1405.

Fig. 17a illustrates an end view of a flexible patterned substrate. At least part of the one major surface of the substrate 1510 includes relief features. The relief features are characterized by protrusions 1511 and recesses 1512. They may for example have a height (measured perpendicular to the substrate from the deepest recess to the tallest protrusion) of 50 nm to 150 µm. The protrusions 1511 and the recesses 1512 together form an exemplary pattern, which serves as the master pattern for the flexographic printing or casting plate made in the method of Fig. 16. The pattern on the substrate can have relief features that include any number of protrusions and/or recesses of any kind, of any shape, of any aspect ratio, having any distribution known in the art, with any of these configurations variable in any way, preferably so long as the pattern has a height from 50 nm to 150 µm, such as 50 nm to 75 µm, 50 nm to 37 µm, 50 nm to 15 µm, or 50 nm to 7 µm.

Fig. 17b illustrates an end view of an uncured soft photopolymer plate comprising a protective mask 1520 and photopolymer material 1521. The presence of a protective mask 1520 in the uncured soft photopolymer plate is optional.

Fig. 17c illustrates an end view of a step of curing a side of the plate which is the same as the plate of Fig. 17b. A curing source 1534, such as a UV light or an electron-beam emitter, emits curing energy 1533 (e.g. heat and/or light), which at least partially cures an outer portion of the photopolymer material, such that the photopolymer material has a cured portion 1532 and an uncured portion 1531. As an example, a curing source (for use with any curing step disclosed herein) may be a DeGraf Concept 400 ECLF plate curing system (available from GLUNZ & JENSEN of Ringsted, Denmark).

Fig. 17d illustrates an end view of a step of removing the mask 1540 from the plate. The removal process 1543 (such as laser ablation) comprises removing the mask 1540 in direction 1544, and exposing an unmasked area 1542 on a surface of the uncured portion 1541 of the photopolymer material. To prepare the plate for subsequent treating and/or impressing 1540, as described below, all of the mask may be removed, such that all of the first side 1542 becomes an unmasked area. It is also possible that only part of the protective mask 1540 may be removed. In this case, the unmasked area may be continuous or discontinuous. As an example, a mask may be ablated using a CDI Spark 4835 Inline UV Digital Flexo image setter (available from ESKO of Ghent, Belgium).

Fig. 17e illustrates an end view of a step of pretreating the plate. A treating source 1552, such as a spray nozzle, a doctor blade, or a draw down rod provides a treatment 1553, which partially treats at least part of an outer portion of the uncured portion 1550 of the plate, e.g., to improve its ability to release a surface after contact. An example of said treating is spraying a thin silicone coating. The uncured portion 1551 may be partially or fully treated.

Fig. 17f illustrates an end view of a step of impressing the flexible patterned substrate 1560 into an exposed surface of the uncured portion 1561 of the soft photopolymer plate. Opposing inward forces 1563 and 1564 provide pressure that presses the substrate 1560 and the plate against each other, such that the pattern of the substrate 1560 is imparted to the plate and the protrusions and recesses of the pattern shape at least an outer portion of the uncured portion 1561 into a pattern that is an inverse of the pattern of the substrate 1560. The protrusions and recesses of relief features of the substrate 1560 become recesses and protrusions of relief features on the plate. The opposed inward forces can be provided by various kinds of mechanical apparatus known in the art, including, for example, the pressure rollers as shown in Fig. 17g. The impressing step may also include applying heat (e.g. by a heater that provides conduction, convection, and/or radiation) to further soften the soft photopolymer plate before and/or during impressing.

Fig. 17g illustrates a side view of a portion of a mechanical apparatus that can be used in the step of impressing the flexible patterned substrate 1570 into an exposed surface of the uncured portion 1571 of the soft photopolymer plate. A first roller 1574 rotates 1576 counterclockwise and a second roller 1575 rotates 1577 clockwise. The rollers 1574 and 1575 together provide distributions of opposing inward forces that press the substrate 1570 and the plate against each other, such that the pattern of the substrate 1570 is imparted to the plate, as the substrate 1570 and the plate passes through 1573 between the rollers 1574 and 1575. The pair of rollers 1574 and 1575 can be provided by a (heated or unheated) roll laminating machine, as known in the art, including, for example, LUX Laminator Model 62 Pro S available from MacDermid, Inc. of Morristown, Tennessee, United States. Substrate and plate may be passed through one or more pairs of such rollers, one or more times, with or without a carrier sheet on either or both sides. Other kinds of laminating machines or presses (with or without rollers) as known in the art may alternatively be used.

Fig. 17h illustrates an end view of a step of partially curing a side of the plate. Therein, the plate is still in contact with the flexible patterned substrate 1580 from the impressing step of Figs. 17f and/or 17g. The substrate 1580 has material properties, e.g. translucence, that allow for transmission of the curing energy. A first curing source 1586 is located outside of the substrate 1580 and emits curing energy 1585 that travels through the substrate 1580. It partially cures at least a portion of the uncured portion 1581 of the photopolymer material. A second curing source 1584 is located outside of the cured portion of the plate 1582 and emits curing energy 1583 that travels through the plate. The plate has material properties, e.g. translucence, that allow for transmission of the curing energy. Thereby, at least a portion of the uncured portion 1581 of the photopolymer material is cured, such that the uncured portion 1581 becomes at least partially cured. Thereby, the substrate 1580 can be more easily removed from the plate without distorting or damaging the pattern formed on the plate. It is also possible that one or more curing sources are used on only one side. Typically, curing energy falls within the UV spectrum, such as UV-A (315 to 400 nm wavelengths), UV-B (280 to 315 nm wavelengths), and UV-C (100 to 280 nm wavelengths), and can be provided by various sources, such as mercury bulbs or LED fixtures configured to provide such wavelengths. As an alternative, the step of partial curing is replaced by a step of full curing, so that the partially cured portion 1581 is fully cured. As a further alternative, the step of partial curing is omitted, so that the partially cured portion 1581 is uncured.

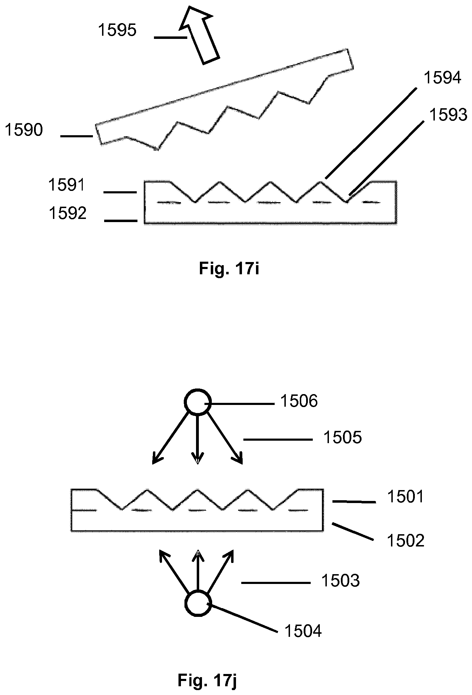

Fig. 17i illustrates an end view of a side of the plate. The flexible patterned substrate 1590 is removed 1595 from the plate, e.g., by pulling or peeling away. The photopolymer material of the plate has a cured portion 1592 and a portion 1591, which depending on previous steps may be uncured, partially cured or fully cured. At least part of the portion 1591 includes protrusions 1594 and recesses 1593, which together form an exemplary pattern, which is the imparted pattern on the flexographic printing plate.

Fig. 17j illustrates an end view of a step of fully curing the photopolymer material of the plate. A first curing source 1506 located outside of the portion 1501 of the plate emits curing energy 1505 that travels to the portion 1501 and contributes to fully curing portion 1501. A second curing source 1504 located outside of the cured portion 1502 of the plate emits curing energy 1503 that travels through the cured portion 1502 which has material properties (e.g. translucence) that allow for transmission of the curing energy. Said curing energy 1503 contributes to fully curing portion 1501, such that the portion 1501 becomes fully cured. Thereby, the pattern formed on the plate is finally cured, and the plate is further prepared for end use.

As an alternative, 1506 is a first treating source emitting detackifying energy 1505 that travels to the portion 1501 and contributes to fully curing portion 1501 by further polymerization of the photopolymer material. 1504 is a second treating source emitting detackifying energy 1503 that travels through the cured portion 1502 that contributes to further polymerization of the photopolymer material. Thereby, the pattern formed on the plate is finally cured, and the plate is further prepared for end use.

One or more treating sources may be used on only one side. A cured photopolymer plate may be detackified in any other way known in the art, for example by immersing the plate in one or more chemical solutions (such as a halogen solution). The step of detackifying the plate is optional. Typically, detackifying energy falls within the UV-C spectrum (100 to 280 nm wavelengths).

Fig. 18 is a flowchart that illustrates the steps of making a patterned flexographic printing or casting plate according to the invention. Step 1601 includes providing a rigid patterned substrate, preferably a patterned steel plate, which is described in further detail in connection with Fig. 19a. Step 1602 includes providing a polymeric material, preferably polypropylene. Step 1603 includes heating the polymeric material in order to bring it in a molten or malleable state. Step 1604 includes forcing the molten or malleable polymeric material onto the substrate, e.g., as described in connection with Fig. 19b. Step 1605 includes cooling the polymeric material. Result 1606 is the flexographic printing or casting plate resulting from the steps 1601-1605.

Fig. 19a illustrates an end view of a rigid patterned substrate. At least part of the one major surface of the substrate 1701 includes relief features. The relief features are characterized by protrusions 1702 and recesses 1703. They may for example have a height (measured perpendicular to the substrate from the deepest recess to the tallest protrusion) of 50 nm to 150 µm. The protrusions 1702 and the recesses 1703 together form an exemplary pattern, which serves as the master pattern for the flexographic printing or casting plate made in the method of Fig. 18. The pattern on the substrate can have relief features that include any number of protrusions and/or recesses of any kind, of any shape, of any aspect ratio, having any distribution known in the art, with any of these configurations variable in any way, preferably so long as the pattern has a height from 50 nm to 150 µm, such as 50 nm to 75 µm, 50 nm to 37 µm, 50 nm to 15 µm, or 50 nm to 7 µm.

Fig. 19b illustrates an injection molding device. A solid polymeric material is loaded in a vessel 1723 via a hopper 1724. The vessel 1723 is heatable, so that the polymeric material can be molten or made malleable in the vessel 1723. As an alternative, a polymeric material can be loaded into the vessel 1723 in an already molten or malleable state. From the vessel 1723, the molten or malleable polymeric material is forced through a nozzle 1722 into a cavity 1721 that is defined by a mold 1720. The mold 1720 comprises a rigid patterned substrate as shown in Fig. 19a.

Fig. 20 shows an example of a microoptic image packaging system 1800 from a side view. The system comprises a substrate 1810, an ink layer 1820 comprising micro-images 1830, and a varnish layer 1840. The varnish layer 1840 is superimposed on the ink layer 1820. The inner surface of the varnish layer 1840 is in contact with the ink layer. The outer surface of the varnish layer 1840 faces away from the ink layer 1820 and the substrate 1810. On the outer surface of the varnish layer 1840, a plurality of relief features 1850 is disposed. Each of the images 1830 are superimposed with one relief feature 1850 which has at least the same maximum diameter as the image 1830 and which is centrally arranged on top of the image 1830.

## Claims

1. Method for printing 3D-microoptic images on packaging systems comprising
a. providing a substrate having a first and a second major surface;
b. printing a plurality of images on at least part of the first major surface of the substrate to provide a substrate with a printed first major surface;
c. applying a transparent varnish layer on the printed first major surface of the substrate, wherein the varnish layer has an inner surface being in contact with the printed first major surface of the substrate and an outer surface facing away from the substrate; and
d. forming a plurality of relief features on the outer surface of the varnish layer, wherein the relief features are micro-lenses, **characterized in that** the relief features on the varnish layer are formed by a filmless casting process using a flexographic casting plate.

2. The method according to claim 1, wherein the substrate is a rigid, non-porous polymeric material selected from the group consisting of high density polyethylene, low density polyethylene, linear low density polyethylene, polypropylene and polyethylene terephthalate.

3. The method according to any of the preceding claims, wherein the images are printed by a process selected from inkjet printing, in-mold labeling, transfer printing, rotogravure, silk screen printing, letterpress printing, offset lithography, and flexographic printing.

4. The method according to any of the preceding claims, wherein the images are micro-images.

5. The method according to any of the preceding claims, wherein the images are arranged in a regular pattern.

6. The method according to any of the preceding claims, wherein the image size is at least 20 µm, preferably in the range of from 20 to 300 µm, and wherein the distance between the images is in the range of from 1 µm to 1 mm, preferably from 5 µm to 100 µm, more preferably from 10 to 50 µm.

7. The method according to any of the preceding claims, wherein the varnish is heat curable, light curable or both, preferably UV curable, preferably wherein the varnish is an acrylic varnish.

8. The method according to any of the preceding claims, wherein the relief features have a height in the range of from 50 nm to 150 µm, preferably from 10 to 30 µm, a diameter of at least 20 µm, preferably in the range of from 20 to 300 µm, and the shape of partial spheres.

9. The method according to any of the preceding claims, wherein the relief features and the images have an identical pattern, preferably wherein each image is superimposed with a relief feature which has at least the same maximum diameter as the image and which is centrally arranged on top of the image.

10. The method according to any of the preceding claims, wherein the images are printed by flexographic printing using a flexographic printing plate, or wherein the relief features are formed by a filmless casting process using a flexographic casting plate, or both, and wherein the flexographic printing plate, the flexographic casting plate, or both are made by a process comprising injection molding, blow molding, embossing, printing, engraving, or combinations thereof.

11. The method according to claim 10, wherein the flexographic printing plate, the flexographic casting plate, or both are flexible and made of a plastic material, preferably polypropylene.

12. The method according to any of claims 10 or 11, wherein the flexographic printing plate, the flexographic casting plate or both are made by a process comprising the following steps:
i. providing a flexible patterned substrate;
ii. pressing the patterned surface of the patterned substrate onto an uncured soft photopolymer plate to provide a patterned uncured photopolymer plate; and
iii. curing the patterned uncured photopolymer plate to provide the patterned flexographic plate.

13. The method according to any of claims 10 or 11, wherein the flexographic casting plate is made by a process comprising the steps
(i) providing a rigid patterned substrate, preferably a patterned steel plate made by laser pulse engraving; and
(ii) applying a polymeric material, preferably polypropylene, in an injection molding process on the rigid patterned substrate to provide the flexographic casting plate.

14. 3D-microoptic image packaging system comprising
A. a substrate having a first and a second major surface;
B. a plurality of images on at least part of the first major surface;
C. a transparent varnish layer on the first major surface of the substrate superimposing the printed images, wherein the varnish layer has an inner surface being in contact with the printed first major surface of the substrate and an outer surface facing away from the substrate; and wherein the varnish layer has a plurality of relief features on the outer surface of the varnish layer, wherein the relief features are micro-lenses, **characterized in that** the relief features on the varnish layer are formed by a filmless casting process using a flexographic casting plate.

## Patentansprüche

1. Verfahren zum Drucken von mikrooptischen 3D-Bildern auf Verpackungssystemen, umfassend
a. Bereitstellen eines Substrats, das eine erste und eine zweite Hauptoberfläche aufweist;
b. Drucken einer Vielzahl von Bildern auf wenigstens einem Teil der ersten Hauptoberfläche des Substrats, um ein Substrat mit einer gedruckten ersten Hauptoberfläche bereitzustellen;
c. Aufbringen einer transparenten Lackschicht auf der gedruckten ersten Hauptoberfläche des Substrats, wobei die Lackschicht eine Innenoberfläche, die mit der gedruckten ersten Hauptoberfläche des Substrats in Kontakt steht, und eine Außenoberfläche aufweist, die von dem Substrat abgewandt ist; und
d. Bilden einer Vielzahl von Reliefmerkmalen auf der Außenoberfläche der Lackschicht, wobei die Reliefmerkmale Mikrolinsen sind, **dadurch gekennzeichnet, dass** die Reliefmerkmale auf der Lackschicht durch ein filmloses Gießverfahren unter Verwendung einer Flexographie-Gießplatte gebildet werden.

2. Verfahren nach Anspruch 1, wobei das Substrat ein steifes, nicht poröses Polymermaterial ist, ausgewählt aus der Gruppe bestehend aus Polyethylen hoher Dichte, Polyethylen niedriger Dichte, linearem Polyethylen niedriger Dichte, Polypropylen und Polyethylenterephthalat.

3. Verfahren nach einem der vorstehenden Ansprüche, wobei die Bilder durch ein Verfahren gedruckt werden, das aus Tintenstrahldruck, In-Mould-Etikettierung, Transferdruck, Rotationstiefdruck, Siebdruck, Buchdruck, Offsetlithographie und Flexographiedruck ausgewählt wird.

4. Verfahren nach einem der vorstehenden Ansprüche, wobei die Bilder Mikrobilder sind.

5. Verfahren nach einem der vorstehenden Ansprüche, wobei die Bilder in einem regelmäßigen Muster angeordnet sind.

6. Verfahren nach einem der vorstehenden Ansprüche, wobei die Bildgröße wenigstens 20 µm beträgt, vorzugsweise im Bereich von 20 bis 300 µm, und wobei der Abstand zwischen den Bildern im Bereich von 1 µm bis 1 mm, vorzugsweise von 5 µm bis 100 µm, mehr bevorzugt von 10 bis 50 µm liegt.

7. Verfahren nach einem der vorstehenden Ansprüche, wobei der Lack wärmehärtbar, lichthärtbar oder beides, vorzugsweise UV-härtbar ist, wobei der Lack vorzugsweise ein Acryllack ist.

8. Verfahren nach einem der vorstehenden Ansprüche, wobei die Reliefmerkmale eine Höhe im Bereich von 50 nm bis 150 µm, vorzugsweise von 10 bis 30 µm, einen Durchmesser von wenigstens 20 µm, vorzugsweise im Bereich von 20 bis 300 µm und die Form von Teilkugeln aufweisen.

9. Verfahren nach einem der vorstehenden Ansprüche, wobei die Reliefmerkmale und die Bilder ein identisches Muster aufweisen, wobei vorzugsweise jedes Bild mit einem Reliefmerkmal überlagert ist, das wenigstens den gleichen maximalen Durchmesser wie das Bild aufweist und das zentral auf dem Bild angeordnet ist.

10. Verfahren nach einem der vorstehenden Ansprüche, wobei die Bilder durch Flexographiedruck unter Verwendung einer Flexographie-Druckplatte gedruckt werden oder wobei die Reliefmerkmale durch ein filmloses Gießverfahren unter Verwendung einer Flexographie-Gießplatte gebildet werden oder beides und wobei die Flexographie-Druckplatte, die Flexographie-Gießplatte oder beide durch ein Verfahren hergestellt werden, das Spritzgießen, Blasformen, Prägen, Drucken, Gravieren oder Kombinationen davon umfasst.

11. Verfahren nach Anspruch 10, wobei die Flexographie-Druckplatte, die Flexographie-Gießplatte oder beide elastisch sind und aus einem Kunststoffmaterial, vorzugsweise Polypropylen, hergestellt sind.

12. Verfahren nach einem der Ansprüche 10 oder 11, wobei die Flexographie-Druckplatte, die Flexographie-Gießplatte oder beide durch ein Verfahren hergestellt werden, das die folgenden Schritte umfasst:
i. Bereitstellen eines elastischen gemusterten Substrats;
ii. Drücken der gemusterten Oberfläche des gemusterten Substrats auf eine ungehärtete weiche Photopolymerplatte, um eine gemusterte, ungehärtete Photopolymerplatte bereitzustellen; und
iii. Härten der gemusterten ungehärteten Photopolymerplatte, um die gemusterte Flexographieplatte bereitzustellen.

13. Verfahren nach einem der Ansprüche 10 oder 11, wobei die Flexographie-Gießplatte durch ein Verfahren hergestellt wird, das die folgenden Schritte umfasst
(i) Bereitstellen eines steifen gemusterten Substrats, vorzugsweise einer gemusterten Stahlplatte, die durch Laserimpulsgravierung hergestellt ist; und
(ii) Aufbringen eines Polymermaterials, vorzugsweise Polypropylen, in einem Spritzgießverfahren auf dem steifen gemusterten Substrat, um die Flexographie-Gießplatte bereitzustellen.

14. Mikrooptisches 3D-Bildverpackungssystem, umfassend
A. ein Substrat mit einer ersten und einer zweiten Hauptoberfläche;
B. eine Vielzahl von Bildern auf wenigstens einem Teil der ersten Hauptoberfläche;
C. eine transparente Lackschicht auf der ersten Hauptoberfläche des Substrats, welche die gedruckten Bilder überlagert, wobei die Lackschicht eine Innenoberfläche, die mit der gedruckten ersten Hauptoberfläche des Substrats in Kontakt steht, und eine Außenoberfläche aufweist, die von dem Substrat abgewandt ist; und wobei die Lackschicht eine Vielzahl von Reliefmerkmalen auf der Außenoberfläche der Lackschicht aufweist, wobei die Reliefmerkmale Mikrolinsen sind, **dadurch gekennzeichnet, dass** die Reliefmerkmale auf der Lackschicht durch ein filmloses Gießverfahren unter Verwendung einer Flexographie-Gießplatte gebildet werden.

## Revendications

1. Procédé d'impression d'images microoptiques en 3D sur des systèmes de conditionnement comprenant
a. la fourniture d'un substrat ayant une première et une seconde surface principale ;
b. l'impression d'une pluralité d'images sur au moins une partie de la première surface principale du substrat pour fournir un substrat avec une première surface principale imprimée ;
c. l'application d'une couche de vernis transparent sur la première surface principale imprimée du substrat, dans lequel la couche de vernis a une surface intérieure en contact avec la première surface principale imprimée du substrat et une surface extérieure tournée vers l'extérieur du substrat ; et
d. la formation d'une pluralité d'éléments en relief sur la surface extérieure de la couche de vernis, dans lequel les éléments en relief sont des micro-lentilles, **caractérisé en ce que** les éléments en relief sur la couche de vernis sont formés par un processus de moulage sans film en utilisant une plaque de moulage flexographique.

2. Procédé selon la revendication 1, dans lequel le substrat est un matériau polymère rigide non poreux, choisi dans le groupe constitué de polyéthylène haute densité, polyéthylène basse densité, polyéthylène basse densité linéaire, polypropylène et polyéthylène téréphtalate.

3. Procédé selon l'une quelconque des revendications précédentes, dans lequel les images sont imprimées par un processus choisi parmi impression à jet d'encre, étiquetage dans le moule, impression par transfert, rotogravure, sérigraphie, impression typographique, lithographie offset et impression flexographique.

4. Procédé selon l'une quelconque des revendications précédentes, dans lequel les images sont des micro-images.

5. Procédé selon l'une quelconque des revendications précédentes, dans lequel les images sont agencées en un motif régulier.

6. Procédé selon l'une quelconque des revendications précédentes, dans lequel la taille de l'image est d'au moins 20 µm, de préférence dans la plage de 20 à 300 µm, et dans lequel la distance entre les images est dans la plage de 1 µm à 1 mm, de préférence de 5 µm à 100 µm, plus préférablement de 10 à 50 µm.

7. Procédé selon l'une quelconque des revendications précédentes, dans lequel le vernis est thermodurcissable, photodurcissable ou l'un et l'autre, de préférence durcissable aux UV, de préférence dans lequel le vernis est un vernis acrylique.

8. Procédé selon l'une quelconque des revendications précédentes, dans lequel les éléments en relief ont une hauteur dans la plage de 50 nm à 150 µm, de préférence de 10 à 30 µm, un diamètre d'au moins 20 µm, de préférence dans la plage de 20 à 300 µm, et la forme de sphères partielles.

9. Procédé selon l'une quelconque des revendications précédentes, dans lequel les éléments en relief et les images ont un motif identique, de préférence dans lequel chaque image est superposée à un élément en relief qui a au moins le même diamètre maximal que l'image et qui est agencé de manière centrale au-dessus de l'image.

10. Procédé selon l'une quelconque des revendications précédentes, dans lequel les images sont imprimées par impression flexographique en utilisant une plaque d'impression flexographique, ou dans lequel les éléments en relief sont formés par un processus de moulage sans film en utilisant une plaque de moulage flexographique, ou l'un et l'autre, et dans lequel la plaque d'impression flexographique, la plaque de moulage flexographique, ou l'une et l'autre, sont fabriquées par un processus comprenant moulage par injection, moulage par soufflage, gaufrage, impression, gravure, ou combinaisons de ceux-ci.

11. Procédé selon la revendication 10, dans lequel la plaque d'impression flexographique, la plaque de moulage flexographique, ou l'une et l'autre, sont souples et faites d'un matériau plastique, de préférence du polypropylène.

12. Procédé selon l'une quelconque des revendications 10 ou 11, dans lequel la plaque d'impression flexographique, la plaque de moulage flexographique ou l'une et l'autre sont faites par un processus comprenant les étapes suivantes :
i. la fourniture d'un substrat souple à motifs ;
ii. le pressage de la surface à motifs du substrat à motifs sur une plaque de photopolymère souple non durcie pour obtenir une plaque de photopolymère non durcie à motifs ; et
iii. le durcissement de la plaque de photopolymère non durcie à motifs pour fournir la plaque flexographique à motifs.

13. Procédé selon l'une quelconque des revendications 10 ou 11, dans lequel la plaque de moulage flexographique est fabriquée par un processus comprenant les étapes
(i) fourniture d'un substrat rigide à motifs, de préférence une plaque d'acier à motifs réalisée par gravure par impulsion laser ; et
(ii) application d'un matériau polymère, de préférence du polypropylène, dans un processus de moulage par injection sur le substrat rigide à motifs pour fournir la plaque de moulage flexographique.

14. Système de conditionnement à images microoptiques en 3D comprenant
A. un substrat ayant une première et une seconde surface principale ;
B. une pluralité d'images sur au moins une partie de la première surface principale ;
C. une couche de vernis transparent sur la première surface principale du substrat superposant les images imprimées, dans lequel la couche de vernis a une surface intérieure en contact avec la première surface principale imprimée du substrat et une surface extérieure tournée vers l'extérieur du substrat ; et dans lequel la couche de vernis a une pluralité d'éléments en relief sur la surface extérieure de la couche de vernis, dans lequel les éléments en relief sont des micro-lentilles, **caractérisé en ce que** les éléments en relief sur la couche de vernis sont formés par un procédé de moulage sans film en utilisant une plaque de moulage flexographique.
